(19) Europäisches Patentamt / European Patent Office / Office européen des brevets

(11) **EP 4 656 794 A2**

(12) **EUROPEAN PATENT APPLICATION**

(43) Date of publication:
03.12.2025 Bulletin 2025/49

(21) Application number: 25209801.7

(22) Date of filing: **13.10.2021**

(51) International Patent Classification (IPC):
***D06L 1/12*** *(2006.01)*

(52) Cooperative Patent Classification (CPC):
**D03D 1/02; D01F 6/00; D03D 15/283; D06L 1/12;
D06L 1/16; D06L 1/20; D06N 3/0006; D06N 3/0034;
D06N 3/0088; D06N 3/103; D06N 3/128;**
B60R 21/36; D06N 2209/067; D06N 2211/268;
D10B 2331/02; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2020 JP 2020172494**

(62) Document number(s) of the earlier application(s) in
accordance with Art. 76 EPC:
**21880169.4 / 4 230 789**

(71) Applicant: **Asahi Kasei Kabushiki Kaisha
Tokyo 1000006 (JP)**

(72) Inventor: **ISE, Fumiaki
Tokyo, 100-0006 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

Remarks:
This application was filed on 20-10-2025 as a
divisional application to the application mentioned
under INID code 62.

(54) **AIRBAG BASE FABRIC AND METHOD FOR MANUFACTURING SAME**

(57) An airbag base fabric which is a polyamide multifilament woven fabric, wherein:
at least one side of the woven fabric has a silicone film layer,
the silicone film amount is 10 g/m$^2$ to 100 g/m$^2$,
the cyclopentanone content is 0 ppm to 250 ppm with respect to the woven fabric weight,
the larger shrinkage dimensional change rate among the shrinkage dimensional change rates in the warp and weft directions before and after heating at 105°C for 60 minutes is 0% to 1.0%, and
the combing resistance after 400 hours in an environment of 85°C, 95% relative humidity is 350 N or greater.

EP 4 656 794 A2

(52) Cooperative Patent Classification (CPC): (Cont.)
    D10B 2505/124

## Description

FIELD

The present invention relates to an airbag base fabric to be used in an airbag for the purpose of automobile safety.

BACKGROUND

It is known that when a traveling vehicle impacts with a pedestrian, the lower body of the impacted pedestrian is knocked away by the front of the vehicle body and experiences a secondary impact with the top of the hood at the front of the vehicle, as explained in PTL 1, for example, and it has been a goal to provide protection from such impact by highly rigid front pillars at both edges of window shield glass provided in a manner standing up from the top of the hood.

Airbag devices for pedestrians are therefore housed in a folded manner, in a retainer case mounted on a support member erected between the left and right car body side members at the top of the rear section of the engine room, as described in PTL 2.

PTL 3 discloses an airbag for passenger protection during vehicle impact, which is also applied for protection of pedestrians.

Such an airbag that deploys outside of a vehicle, being mounted on the vehicle exterior, must have a unique level of durability in addition to the properties required for airbags for driver seats or passenger seats which are mounted inside the vehicle. Specifically, it must be able to withstand outside environment conditions and the working conditions employed to support vehicle performance, such conditions including light, ultraviolet rays, heat, rain, snow, low temperature, hot water, oil and solvents, cleansers and dirt. The effects of environmental factors become even more pronounced when the airbag is not stored in an enclosed robust container, or if the sealed container is damaged.

As a measure against this, PTL 4 discloses providing a covering material on the outer surface of base fabric of the bag body.

PTL 5 discloses an airbag base fabric with a coating amount of 20 $g/m^2$ or lower, but with excellent lightweight properties, air permeability before and after heat resistance testing and humidity testing, and ability to maintain flame retardance, which is achieved by coating with only a specified water-soluble resin.

[CITATION LIST]

[PATENT LITERATURE]

[PTL 1] Japanese Unexamined Patent Publication HEI No. 7-108903
[PTL 2] Japanese Unexamined Patent Publication No. 2018-172006
[PTL 3] Japanese Unexamined Patent Publication No. 2006-205805
[PTL 4] Japanese Unexamined Patent Publication No. 2004-115981
[PTL 5] Japanese Unexamined Patent Publication No. 2001-214371

SUMMARY

[TECHNICAL PROBLEM]

It is desirable for an airbag to have excellent flame retardance when using either the back or front of the airbag base fabric as the outer surface, in light of the diverse nature of conditions under which it is to be used, both inside and outside of a vehicle. Flammability evaluation standards (FMVSS302) specify igniting a sample of the material while holding it horizontal with the surface facing downward in the cabin. The evaluation is therefore usually conducted with the woven fabric side as the outer surface of the airbag base fabric (the opposite side from the resin-coated side) facing downward. When the resin-coated side is the outer surface of the airbag base fabric, the resin-coated side faces downward during ignition, and ignition of the resin-coated side increases the burning speed.

For an airbag that is mounted and deployed outside of the vehicle, it must also exhibit flame resistance after having being exposed to the outside environment conditions.

PTL 4 does not adequately address flame resistance when the resin-coated side is on the outer surface of the airbag base fabric, or flame resistance after exposure to outside environment conditions.

PTL 5 does not examine flame retardance of both the front and back sides of the airbag base fabric.

The problem to be solved by the invention is therefore to provide an airbag base fabric whereby combustibility with both resin-coated surface ignition and non-coated surface ignition of the airbag base fabric is inhibited in flammability evaluation established by FMVSS302, after environmental resistance testing.

[SOLUTION TO PROBLEM]

The present invention is an airbag base fabric comprising a coated woven fabric, and has been devised based on the finding that the combustion properties of the base fabric are less affected by the environment if it has specific chemical properties and thermal dimensional stability.

Specifically, the present invention provides the following.

[1] An airbag base fabric which is a polyamide multifilament woven fabric, wherein:

at least one side of the woven fabric has a silicone film layer,
the silicone film amount is 10 $g/m^2$ to 100 $g/m^2$,
the cyclopentanone content is 0 ppm to 250 ppm with respect to the woven fabric weight,
the larger shrinkage dimensional change rate among the shrinkage dimensional change rates in the warp and weft directions before and after heating at 105°C for 60 minutes is 0% to 1.4%, and
the combing resistance after 400 hours in an environment of 85°C, 95% relative humidity is 350 N or greater.

[2] The airbag base fabric according to [1] above, wherein the amount of oil component in the woven fabric is 0 wt% to 0.04 wt%.

[3] The airbag base fabric according to [1] or [2] above, which contains 10 ppm to 300 ppm phosphorus atoms with respect to the weight of the constituent yarn of the woven fabric.

[4] The airbag base fabric according to any one of [1] to [3] above, wherein the amount of carboxylic acid ends is greater than the amount of amine ends at the molecular chain ends of the polyamide, the difference being 10 millimole equivalent/kg to 50 millimole equivalent/kg.

[5] The airbag base fabric according to any one of [1] to [4] above, which satisfies the following condition 1) or 2) in both the warp and weft directions:

1) being self-extinguishing after ignition of either the front or back side of the base fabric,
2) having a burning speed of 100 mm/min or lower on both the front and back sides of the base fabric, and a ratio of 1.0 to 3.0 between the burning speeds on the front and back sides, in an FMVSS302 combustion test after 400 hours in an environment of 80°C, 95% relative humidity.

[6] A method for producing an airbag base fabric of a polyamide multifilament woven fabric, the method including the following steps:

a step of melt spinning a polyamide to obtain a polyamide multifilament yarn having a cyclopentanone content of 0 ppm to 800 ppm,
a step of using the polyamide multifilament yarn as weaving yarn to obtain a woven fabric,
a scouring step using an alkali washing solution at a temperature of 35°C or higher,
a drying step,
a step of coating silicone onto at least one side of the woven fabric to form a silicone film layer, and
a vulcanizing setting step.

[7] The method for producing an airbag base fabric according to [6] above, wherein in the scouring step, water rinsing is carried out after a treatment bath of an alkali washing solution or surfactant.

[8] The method for producing an airbag base fabric according to [6] or [7] above, wherein in the scouring step, the warp tension while the woven fabric is conveyed is 0.08 N/cm to 0.8 N/cm.

[9] The method for producing an airbag base fabric according to any one of [6] to [8] above, wherein in the vulcanizing setting step, vulcanizing setting is carried out with an overfeed of 0.8% or greater in the warp direction at a temperature of 160°C or higher.

[ADVANTAGEOUS EFFECTS OF INVENTION]

The airbag base fabric of the invention has a low difference in evaluated flammability between the coated side and non-coated side, and excellent maintenance of flame retardance after environmental resistance testing. The base fabric can be used in particular as an airbag cushion suitable for an airbag device that is mounted outside and is exposed to harsh environmental change conditions.

BRIEF DESCRIPTION OF DRAWINGS

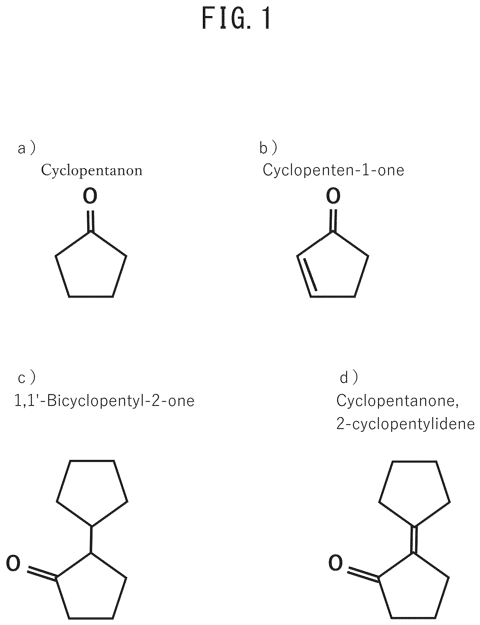

Fig. 1 shows the structural formulas for compounds a) to d).

DESCRIPTION OF EMBODIMENTS

An embodiment of the invention will now be described in detail.

One embodiment of the invention is an airbag base fabric comprising a polyamide multifilament woven fabric, wherein:

at least one side of the woven fabric has a silicone film layer,
the silicone film amount is 10 g/m$^2$ to 100 g/m$^2$,
the cyclopentanone content is 0 ppm to 250 ppm with respect to the woven fabric weight,
the larger shrinkage dimensional change rate among the shrinkage dimensional change rates in the warp and weft directions before and after heating at 105°C for 60 minutes is 0% to 1.4%, and
the combing resistance after 400 hours in an environment of 85°C, 95% relative humidity is 350 N or greater.

The constituent yarn of the airbag base fabric consists of long fibers comprising polyamide multifilaments. Because polyamide fibers have a high melting point and large heat capacity, they exhibit excellent burst resistance during explosive deployment of an airbag, due to their melt resistance. They also have excellent adhesion with coating films due to the presence of amide groups and the amino groups or carboxyl groups at the polymer ends. The polyamide may be fibers made of polyamide 6, polyamide 6/6, polyamide 11, polyamide 12, polyamide 6/10, polyamide 6/12, polyamide 4/6, or their copolymers, or a blend thereof. They are preferably polyamide 6/6 fibers composed mainly of polyhexamethylene adipamide. Polyhexamethylene adipamide is a polyamide composed of 100% hexamethylenediamine and adipic acid and having a melting point of 250°C or higher. The polyamide 6/6 fibers of the invention may also include fibers made of a polymer obtained by copolymerizing or blending polyamide 6, polyamide 6/I, polyamide 6/10 or polyamide 6/T with polyhexamethylene adipamide, in a range such that the melting point is not below 250°C.

<Multifilament>

The size of the constituent yarn of the base fabric is preferably 150 dtex to 750 dtex. A size of 150 dtex or greater results in excellent mechanical properties when it is woven into a fabric for use as a material. Productivity is satisfactory with a size of 750 dtex or lower, as the transport weight will not be so heavy as to prevent following of the inserted weft yarn during high-speed weaving of 800 rpm or greater using a shuttleless loom. The size is more preferably 220 dtex or greater, even more preferably 550 dtex or lower and yet more preferably 450 dtex or lower.

For this embodiment, the constituent yarn of the base fabric is a multifilament composed of a monofilament bundle, the sizes of the monofilaments being preferably 1 dtex to 7 dtex. If the monofilament sizes are 1 dtex or greater there will be less deterioration in the mechanical properties during the process from weaving yarn to base fabric, and if they are 7 dtex or lower, microscopic adhesion with coating films will be satisfactory, thus inhibiting its burning speed and stabilizing its behavior. The base fabric will also have satisfactory softness and satisfactory storability as an airbag.

The shapes of the monofilament cross-sections may be circular cross-sections or atypical (irregular) cross-sections.

The condition of a woven base fabric can be represented by the cover factor as the degree of filling within the plane. The cover factor is calculated from the size and woven density of the constituent yarn of the base fabric. The cover factor CF is determined by summing the size d (dtex) and the woven density D (number/2.54 cm) of the constituent yarn in the warp direction (w) and weft direction (f).

$$CF = (\sqrt{(dw)} \times Dw) + (\sqrt{(df)} \times Df)$$

For this embodiment, the cover factor is preferably 1,800 to 2,500. The cover factor is preferably as large as 1,800 or greater for satisfactory mechanical properties of the base fabric due to the woven density effect. The cover factor is more preferably 2,000 or greater. A small cover factor of 2,500 or lower will result in lower crowding of the constituent yarn and more satisfactory softness of the base fabric. This is associated with more excellent storability as an airbag. The cover factor is also more preferably 2,300 or lower.

The airbag base fabric of the embodiment has a silicone film layer on at least one side of the woven fabric. The silicone film may be a coated film or a laminated film. The silicone film is present in an amount of 10 g/m² to 100 g/m². A silicone film amount of 10 g/m² or greater contributes to airtightness and also combustion inhibition as an airbag. The amount is more preferably 15 g/m² or greater. A silicone amount of 100 g/m² or lower will result in a lighter and more satisfactorily storable base fabric. The amount of silicone film is more preferably 70 g/m² or lower and even more preferably 40 g/m² or lower.

The airbag base fabric of the embodiment has a cyclopentanone content of 250 ppm or lower with respect to the weight of the constituent yarn. Cyclopentanones are the compounds shown in Fig. 1: a) cyclopentanon, b) cyclopenten-1-one, c) 1,1'-bicyclopentyl-2-one, and d) cyclopentanone, 2-cyclopentylidene, the cyclopentanone content being the total contents of these compounds. If the cyclopentanone content is 250 ppm or lower, the silicone layer adhesion will be satisfactory and the increase in burning speed after exposure to moist heat environments will be lower. The cyclopentanone content is more preferably 150 ppm or lower and even more preferably 50 ppm or lower. The lower limit for the cyclopentanone content is preferably 0 ppm or greater and more preferably 10 ppm or greater. Cyclopentanones inhibit adhesion of polyamide and silicone, and in particular weaken their adhesion after exposure to moist heat environments. Cyclopentanones are derived from polyamides. Polyamides generate cyclopentanones by heat degradation at their melting temperature. Cyclopentanones that cannot be removed before processing of the base fabric using polyamide as the weaving yarn will remain in the base fabric. Although the cyclopentanone content can be analyzed by gas chromatography, cyclopentanones partially form dimers in the analysis process as well, and these are therefore quantified as cyclopentanones. The cyclopentanone content decreases depending on the cyclopentanone content of the polyamide raw yarn used for weaving and the processing conditions for the base fabric.

In order to limit the cyclopentanone content in the base woven fabric to no greater than 250 ppm with respect to the weight of the constituent yarn, it is preferred to use an alkali washing solution for scouring at a temperature of 35°C or higher in the scouring after weaving. It is more preferred to use an alkali washing solution for scouring at a temperature of 60°C or higher. The cyclopentanone content also decreases by rinsing with neutral water after the alkali washing solution. Relaxation of the base fabric in the scouring step will promote permeation of the rinse solution between the constituent yarn of the base fabric, likewise reducing the cyclopentanone content.

The larger shrinkage dimensional change rate among the shrinkage dimensional change rates of the airbag base fabric of the embodiment in the warp and weft directions during 60 minutes at 105°C is 1.4% or lower. A thermal dimensional stability as low as 1.4% or lower and with a smaller value will result in less increase in the burning speed after exposure to a moist heat environment. The thermal dimensional stability is more preferably 1.0% or lower and even more preferably 0.8% or lower. The thermal dimensional stability of the base fabric changes due to the effects of heat setting in the final stage of base fabric processing. Dimensional change is usually stable, being larger in the warp direction and relatively smaller in the weft direction, and is generally 0.1% or lower.

Supply of combustion gas to the combustion flame may also be reduced to reduce the burning speed of the airbag base fabric. Combustion gas consists mainly of polyamide decomposition gas, but when the base fabric is placed with the silicone layer facing upward using combustion by a horizontal method, and combustion gas is supplied to the combustion flame on the top surface of the base fabric, migration of gas to the top surface is inhibited by the flame retardant silicone layer, thereby lowering the burning speed. When the base fabric is placed with the silicone layer facing downward, on the other hand, with combustion by a horizontal method, supply of combustion gas to the combustion flame on the top surface of the base fabric is not blocked, and the burning speed is higher. Since separation or cracking of the silicone layer occurs with reduced silicone layer adhesion and dimensional changes (shrinking) of the base fabric after exposure to a moist heat environment, this results in a still higher burning speed since the combustion gas is no longer blocked by the silicone layer. The low cyclopentanone content and satisfactory dimensional stability thus work together to reduce the increase in burning speed after moist heat environment exposure.

In order to limit the larger of the shrinkage dimensional change rates among the shrinkage dimensional change rates in the warp and weft directions before and after heating at 105°C for 60 minutes to a range of 0 to 1.4%, the overfeed in the warp direction at a temperature of 160°C or higher is preferably 0.8% or greater in the vulcanizing setting step after silicone coating. Overfeed processing at 1.0% or greater is more preferred. Overfeed processing at 8.0% or lower is also preferred to allow stabilized processing.

The airbag base fabric of the embodiment preferably has a combing resistance of 350 N or greater after moist heat environment exposure (400 hours in an environment of 85°C, 95% relative humidity). This is more preferably 420 N or greater and even more preferably 470 N or greater. Combing resistance is the resistance against shifting of the constituent yarn of the woven fabric, and it includes the resistance of silicone adhesion combined with the constraining force on the constituent yarns of the woven fabric texture. A greater combing resistance above 350 N corresponds to more excellent silicone layer adhesion. High combing resistance is one factor for reducing the burning speed. Combing resistance of 800 N or lower corresponds to sufficiently high tearing resistance.

The airbag base fabric of the embodiment preferably has an amount of oil component of 0.04 wt% or lower in the woven fabric. A smaller amount of oil component at 0.04 wt% or lower indicates that the deoiling step was adequate during scouring. The amount of oil component in the woven fabric is more preferably 0.02 wt% or lower. A low amount of oil component results in satisfactory adhesion between the polyamide fibers and silicone layer, and reducing the cyclopentanone content as well helps to improve the adhesion and avoid adhesion damage after moist heat environment exposure. The weaving raw yarn has a process oil content of about 1%, which can be removed by scouring after weaving. The amount of oil component is preferably 0.005 wt% or greater. This will result in a sufficiently high value for the tearing resistance.

The airbag base fabric of the embodiment preferably has a phosphorus atom content of 10 ppm to 300 ppm with respect to the weight of the constituent yarn. A higher phosphorus atom content will inhibit combustion gas generation and provide a greater combustion inhibition effect. The phosphorus atom content is more preferably 30 ppm or greater and even more preferably 40 ppm or greater. Since phosphorus atoms acts as a catalyst poison for silicone crosslinking, there is an upper limit for their content as well. The phosphorus atom content is more preferably 200 ppm or lower and even more preferably 150 ppm or lower.

The phosphorus atoms derive from the catalyst used to produce the polyamide resin. The catalyst that is added may be a phosphoric acid compound such as phosphoric acid, pyrophosphoric acid or polyphosphoric acid, a phosphine acid compound such as dimethylphosphinic acid, phenylmethylphosphinic acid, hypophosphorous acid, sodium hypophosphite or ethyl hypophosphite, a phosphonous acid compound such as phenylphosphonous acid, sodium phenylphosphonite or ethyl phenylphosphonite, a phosphonic acid compound such as phenylphosphonic acid, ethylphosphonic acid, sodium phenylphosphonate, diethyl phenylphosphonate or sodium ethylphosphonate, or a phosphorous acid compound such as phosphorous acid, sodium hydrogenphosphite, sodium phosphite, triethyl phosphite, triphenyl phosphite or pyrophosphorous acid.

The polyamide preferably contains phenylphosphonic acid or its metal salt at 10 ppm to 300 ppm as the phosphorus component with respect to the polymer weight. Phenylphosphonic acid is generally used as a polymerization catalyst.

The method of obtaining polyamide 6/6 containing phenylphosphonic acid or its metal salt may be addition of the phenylphosphonic acid or its metal salt during solution polymerization, or alternatively additives may be used, since phenylphosphinic acid and its metal salts may be oxidized to phenylphosphonic acid if added directly during the processing steps.

Such additives may also be introduced during the polymerization step. It is also possible to include small amounts of antioxidants and heat-resistant stabilizers (such as hindered phenol-based compounds, hydroquinone-based compounds and thiazole-based compounds, or phosphorus-based compounds such as phenylphosphonic acid, imidazole-based compounds such as 2-mercaptobenzimidazole and substituents thereof, and halides such as copper halides, copper acetate and halogens), weatherproofing agents (such as resorcinol-based, salicylate-based, benzotriazole-based, benzophenone-based and hindered amine-based agents), pigments (such as cadmium sulfide, phthalocyanine and carbon black), gloss improvers (such as titanium oxide and calcium carbonate), dyes (such as nigrosine and aniline black), crystal nucleating agents (such as talc, silica, kaolin and clay), plasticizers (such as octyl p-oxybenzoate and N-butylbenzenesulfonamide), antistatic agents (such as alkyl sulfate-type anionic antistatic agents, quaternary ammonium salt-type cationic antistatic agents, polyoxyethylenesorbitan monostearate or similar nonionic antistatic agents or betaine-based amphoteric antistatic agents), flame retardants (such as melamine cyanurate, or hydroxides such as magnesium hydroxide and aluminum hydroxide), ammonium polyphosphate, brominated polystyrene, brominated polyphenylene oxide, brominated polycarbonate, brominated epoxy resins or combinations of these brominated flame retardants with antimony trioxide), light stabilizers such as manganese acetate, and antifoaming agents.

For polyamide polymerization, it is important to increase the polymerization degree by the balance of amino-terminal groups and carboxylic acid-terminal groups, in order to inhibit production of cyclopentanones and promote rapid and uniform polymerization reaction.

A high polymerization degree is preferred for higher physical properties of the fibers. A polyamide with a high polymerization degree is one wherein the sum of the amino-terminal groups and carboxylic acid-terminal groups is preferably 150 millimole equivalent/kg polymer or less, more preferably 130 millimole equivalent/kg polymer or less, and even more preferably 110 millimole equivalent/kg polymer or less. For more homogeneous fibers, this is preferably 50 millimole equivalent/kg polymer or greater, more preferably 70 millimole equivalent/kg polymer or greater and even more preferably 90 millimole equivalent/kg polymer or greater.

According to this embodiment, therefore, the carboxyl-terminal group concentration of the polyamide is in excess of the amino-terminal group concentration, the difference in terminal group concentrations being preferably 5 millimole equivalent/kg polymer to 80 millimole equivalent/kg polymer, more preferably 10 millimole equivalent/kg polymer to 60 millimole equivalent/kg polymer, and even more preferably 20 millimole equivalent/kg polymer to 50 millimole equivalent/kg polymer. If the carboxyl-terminal group concentration is high and the concentration difference is greater than 5 millimole equivalent/kg polymer, the hydrogen ion concentration in the internal environment of the polyamide will be high, catalyst toxicity of phosphorus compounds will be reduced, the polyamide/silicone adhesion will be satisfactory and the resistance of the adhesion to moist heat will be satisfactory. A concentration difference of 80 millimole equivalent/kg polymer or less by excess carboxyl-terminal group concentration will result in a high polymerization degree and will help to obtain high strength fibers for stretching. A higher carboxyl-terminal group concentration will also inhibit production of tertiary amines during melting, to yield weaving yarn with satisfactory spinning operability and satisfactory fluff quality.

Another embodiment of the invention is a method for producing an airbag base fabric of a polyamide multifilament woven fabric, the method including the following steps:

a step of melt spinning a polyamide to obtain a polyamide multifilament yarn having a cyclopentanone content of 0 ppm to 800 ppm,
a step of using the polyamide multifilament yarn as weaving yarn to obtain a woven fabric,
a scouring step using an alkali washing solution at a temperature of 35°C or higher,
a drying step,
a step of coating silicone onto at least one side of the woven fabric to form a silicone film layer, and
a vulcanizing setting step.

The cyclopentanone content of the polyamide resin before melt spinning is preferably 0 ppm to 1,000 ppm, more preferably 800 ppm or lower and even more preferably 80 ppm or lower.

For the polymerization reactor used to produce the resin composition forming the polyamide fibers, it is useful to employ a step of heating at relatively low temperature to remove the moisture under high pressure, and a step of promoting polycondensation reaction at high temperature. A single reactor may be used, or two reactors may be used in a consecutive manner. The polyamide resin composition may be discharged as a strand from the polymerization reactor, subjected to cooling/cutting and pelletized, and then dried to remove the moisture, to obtain pellets suitable for fibers. The method for producing the resin composition for the polyamide fibers may be polymerization of a polyamide resin composition in liquid phase followed by solid-phase polymerization to further increase the polymerization degree. A solid-phase polymerization method carried out at below the melting temperature can inhibit heat degradation of the polymer itself, and is therefore a preferred method for avoiding increase in cyclopentanones in the polymer. For a polyamide resin it is also possible to include small amounts of antioxidants and heat-resistant stabilizers (such as hindered phenol-based compounds, hydroquinone-based compounds and thiazole-based compounds, or phosphorus-based compounds such as phenylphosphonic acid, imidazole-based compounds such as 2-mercaptobenzimidazole and substituents thereof, and copper halides or iodine compounds), weatherproofing agents (such as resorcinol-based, salicylate-based, benzotriazole-based, benzophenone-based and hindered amine-based agents), pigments (such as cadmium sulfide, phthalocyanine and carbon black), gloss improvers (such as titanium oxide and calcium carbonate), dyes (such as nigrosine and aniline black), crystal nucleating agents (such as talc, silica, kaolin and clay), plasticizers (such as octyl p-oxybenzoate and N-butylbenzenesulfonamide), antistatic agents (such as alkyl sulfate-type anionic antistatic agents, quaternary ammonium salt-type cationic antistatic agents, polyoxyethylenesorbitan monostearate or similar nonionic antistatic agents or betaine-based amphoteric antistatic agents), flame retardants (such as melamine cyanurate, or hydroxides such as magnesium hydroxide and aluminum hydroxide), ammonium polyphosphate, brominated polystyrene, brominated polyphenylene oxide, brominated polycarbonate, brominated epoxy resins or combinations of these brominated flame retardants with antimony trioxide).

The spinning temperature during melt spinning is preferably 290°C to 310°C. The spinning temperature is preferably set to 310°C or lower to inhibit thermal decomposition of the polyamide, the temperature being more preferably 300°C or lower and even more preferably 295°C or lower. The spinning temperature is also preferably 290°C or higher for the polyamide to exhibit a sufficient melt flow property, for uniform discharge through the discharge holes, and to allow high-ratio stretching.

A shorter residence time (time until the molten polyamide resin is discharged from the spinning nozzle) is preferred in the melt spinning step. The residence time is preferably 30 minutes or less, more preferably 15 minutes or less and even more preferably 0.5 minutes to 7 minutes. A shorter time is preferred in order to increase the cyclopentanone content in the polymer at the melting temperature.

In the melt spinning step it is preferred to use a uniaxial or biaxial extruder in the melt zone. In order to allow the extruder to guide the polyamide resin through the polymer tubes, gear pumps and spinning pack with application of suitable pressure, it is preferred to inhibit increase in the cyclopentanone content resulting from thermal decomposition of the polyamide without causing abnormal retention in the flow channels.

The polyamide resin is also preferably filtered using a metal fiber nonwoven fabric filter or sand at a stage before discharge from the spinning nozzle, in order to stabilize the spinning operation.

The shapes of the nozzles of the spinneret may be selected according to the desired cross-sectional shapes for the monofilaments composing the filament that is to be produced. The yarn spun from the spinneret is solidified with cooling air, coated with process oil, taken up, stretched and heat treated to obtain polyamide fibers to be used for the invention.

For polyamide fibers it is important to have a low cyclopentanone content in the polymer as measured by the method described above. A low cyclopentanone content in the polyamide fibers used for weaving can reduce the amount of cyclopentanones in the airbag base fabric. The amount of cyclopentanones in the polyamide fibers is preferably 800 ppm or lower, more preferably 600 ppm or lower, even more preferably 400 ppm or lower and most preferably 80 ppm or lower.

The polyamide fiber filaments preferably have a strength of 7 cN/dtex. A strength of 7 cN/dtex or greater is preferred because fluff is less likely to be generated during the weaving step even with high weaving tension and a high-density woven fabric with satisfactory processing throughput can be obtained, the strength being more preferably 7.5 cN/dtex or greater, even more preferably 8 cN/dtex or greater, yet more preferably 9.0 cN/dtex or greater and most preferably 9.5 cN/dtex or greater. The tensile strength of the polyamide fiber filaments is 10.5 cN/dtex or lower in practice, considering their other properties and also production cost.

The oil adhesion rate of the polyamide fibers is preferably 0.6 to 1.5 wt%. An oil adhesion rate of 1.5 wt% or lower will essentially eliminate any problems with running of the weft yarn due to stickiness (tack), and will maintain the ability of the weft yarn to be conveyed by air or water as the conveying medium of the weft yarn (which can be lost when the apparent cross-sectional area is reduced by excessive monofilament convergence beyond the monofilament convergence by tangling), thus resulting in satisfactory weaving stability. An oil adhesion rate of 0.6 wt% or greater, on the other hand, will allow smooth supply of the weft yarn by a suitable friction reducing effect, resulting in excellent productivity without halting of the loom during weaving.

The loom used for weaving may be a water jet loom, airjet loom, rapier loom or the like. The airbag base fabric is preferably a high-density fabric, with increased warp yarn tension and satisfactory processing throughput in the warping and weaving steps. Setting a high warp yarn tension during weaving creates effective reed-beating conditions for formation of a high-density fabric. In particular it creates a curved form with sufficient clamping of the warp yarn, and increases the warp crimp.

A fabric woven in this manner allows the process oil on the polyamide fibers to be washed off in the scouring step while simultaneously having a reduced cyclopentanone content in the fibers.

Hot water or pressurized hot water may be selected for the scouring step, which may be carried out with treatment in one or more stages. Scouring is preferably carried out with application of a publicly known scouring agent. A combination of a nonionic activator and soda ash or a combination of a higher alcohol sulfate and soda ash may be used. Scouring with an alkali agent such as soda ash is particularly effective for removing the process oil on the fiber surfaces while reducing cyclopentanones in the fibers.

The temperature in the scouring step is preferably 35°C or higher, and more preferably in the range of 60°C to 98°C. A higher temperature in the scouring step can lower the cyclopentanone content in the fibers. The scouring step is preferably rinsing treatment (water rinsing) carried out after scouring with a scouring agent. A multistage rinsing step with a long residence time is preferred in order to increase the hydrogen ion concentration in the polyamide fibers. Increasing the hydrogen ion in the polyamide fibers can inhibit catalyst toxicity by phosphorus compounds in the silicone addition reaction, and can avoid inhibiting adhesion between silicone and the woven fabric.

The scouring step may be carried out continuously after the weaving step or as a separate step after weaving. Either a batch system or a continuous system may be employed, but continuous treatment while supplying and discharging the base fabric in and out of the treatment zone is preferred for superior productivity.

Loosening the woven fabric texture in the scouring step will aid in promoting removal of cyclopentanones.

The woven fabric is preferably not clamped in the cross-machine direction while being conveyed in the scouring bath. The conveyance tension in the warp direction is preferably 0.8 N/cm or lower and more preferably 0.5 N/cm or lower.

A warp tension of 0.08 N/cm or greater is preferred to avoid generating wrinkles without sagging of the woven fabric while it is conveyed.

For tensile force control while conveying, a dancer roll may be provided to allow control of the tensile load.

The woven fabric shrinks during the scouring step depending on the bath temperature and the heat shrinkage properties of the constituent fibers, but maintaining low warp tension while shrinkage takes place, allowing shrinkage in the cross-machine direction and loosening the fabric texture, will help with removal of cyclopentanones.

The woven fabric is preferably heat set in a heat setting step. The heat setting temperature is preferably 110°C to 160°C and more preferably 130°C to 150°C, and the heat setting time may be appropriately selected within a range of 0.1 minute to 30 minutes. It is also preferably dried while creating tension so as to maintain a fixed contractive force on the woven fabric in the heat setting step. Heat setting the woven fabric will help ensure stable processability in the subsequent resin coating step.

The scoured woven fabric may also be subjected to drying treatment as necessary before the heat setting step. The drying temperature is in the range of preferably 80°C to 130°C and more preferably 100°C to 120°C. The processing time is preferably selected as appropriate within 0.1 minute to 30 minutes. Drying may be carried out with the woven fabric either in a relaxed state or in a state of tension.

The airbag base fabric of the embodiment is subjected to silicone coating and finish heat setting to produce a coated base fabric for an airbag.

The silicone to be applied is preferably one with excellent flame retardance, heat resistance and air shielding properties.

The silicone to be applied is preferably addition reaction-curing silicone rubber in a solventless form.

The alkenylorganopolysiloxane as the main component of a silicone is the base polymer of the coating agent, having at least 2 alkenyl groups bonded to a silicon atom. A straight-chain organopolysiloxane is generally preferred in practice, and specifically preferred is a straight-chain diorganopolysiloxane with a molecular chain consisting mainly of repeating diorganosiloxane units, and closed with triorganosiloxy groups at both ends of the molecular chain. There is no limitation to the positions of the alkenyl groups bonded to the silicon atoms on the main chain, and the alkenyl groups may be bonded only to silicon atoms at the end portions of the molecular chain or only to silicon atoms on non-end portions of the molecular chain, or they may be bonded to both. Examples of organo groups on side chains include unsubstituted or substituted monovalent hydrocarbon groups of 1 to 10 carbon atoms without aliphatic unsaturated bonds. Methyl and phenyl groups, or combinations of both, are preferred. Alkenyl groups include alkenyl groups of 2 to 8 carbon atoms. These include, specifically, vinyl, allyl, 1-propenyl, isopropenyl, 1-butenyl, isobutenyl and hexenyl groups. Vinyl groups are especially preferred among these.

Organic silicon compounds in the crosslinking component of the silicone are one or more selected from the group consisting of organohydrogensilanes comprising at least 2 silicon atom-bonded hydrogen atoms, straight-chain or branched organohydrogenpolysiloxanes comprising at least 2 (especially 2 or 3) diorganohydrogensilyl groups (i.e. hydrogen atoms bonded to the silicon atoms at the molecular chain ends), and hydrocarbon compounds comprising at least 2 (especially 2 or 3) diorganohydrogensilyl groups. Examples of organic groups to be bonded to the silicon atoms include alkyl groups such as methyl, ethyl, propyl, butyl, pentyl and hexyl groups; aryl groups such as phenyl, tolyl and xylyl groups; and alkyl halide groups such as 3-chloropropyl and 3,3,3-trifluoropropyl groups. The diorganohydrogensilyl groups may also be dimethylhydrogensilyl groups. Specific examples include methylsilane ($(CH_3)SiH_3$), dimethylsilane ($(CH_3)_2SiH_2$), ethylsilane ($(C_2H_5)SiH_3$), diethylsilane ($(C_2H_5)_2SiH_2$), hexylsilane ($(C_6H_{13})SiH_3$), dihexylsilane ($(C_6H_{13})_2SiH_2$), n-octylsilane ($(n-C8H_{17})SiH_3$), di(n-octyl)silane ($(n-C_8H_{17})_2SiH_2$), phenylsilane ($(C_6H_5)SiH_3$), diphenyl-silane ($(C_6H_5)_2SiH_2$), tris(dimethylhydrogensiloxy)methylsilane, tris(dimethylhydrogensiloxy)phenylsilane, tris(dimethylhydrogensilylethyl)methylsilane, tris(dimethylhydrogensilylethyl)phenylsilane and 1,4-bis(dimethylhydrogensilyl)benzene.

The content of crosslinking components is an amount for a molar ratio of silicon atom-bonded hydrogen atoms among the components in the range of 0.01 to 5.0, preferably in the range of 0.1 to 2.0 and most preferably in the range of 0.1 to 1.0, with respect to alkenyl groups in the total coating agent. The proportion of alkenyl groups in component (A) with respect to alkenyl groups in the total coating agent is preferably 90 mol% to 100 mol% and more preferably 95 to 100 mol%.

The silicone reaction catalyst used is a platinum group metal catalyst, and may be a publicly known hydrosilylating reaction catalyst. Examples include platinum group metals such as platinum (including platinum black), rhodium and palladium; platinum chloride, chloroplatinic acid and chloroplatinic acid salts such as $H_2PtCl_4 \cdot nH_2O$, $H_2PtCl_6 \cdot nH_2O$, $NaHPtCl_6 \cdot nH_2O$, $KHPtCl_6 \cdot nH_2O$, $Na_2PtCl_6 \cdot nH_2O$, $K_2PtCl_4 \cdot nH_2O$, $PtCl_4 \cdot nH_2O$, $PtCl_2$ and $Na_2HPtCl_4 \cdot nH_2O$ (where n is an integer of 0 to 6 and preferably 0 or 6); alcohol-modified chloroplatinic acid; complexes of chloroplatinic acid and olefins; platinum group metals such as platinum black or palladium supported on supports such as alumina, silica or carbon; complexes of platinum and triphenylphosphine; rhodium-olefin complexes; chlorotris(triphenylphosphine)rhodium (Wilkinson catalyst); and complexes of platinum chloride, chloroplatinic acid or chloroplatinic acid salts with vinyl group-containing siloxanes and especially vinyl group-containing cyclic siloxanes. Especially preferred among these are platinum-based catalysts such as complexes with vinyl group-containing cyclic siloxanes; and complexes of platinum and triphenylphosphine.

Other components may also be added to the silicone. Such components may be, for example, inorganic fillers for improved cured resin properties, such as fine silica powder to reinforce the resin strength or calcium carbonate powder to reinforce the resin toughness, or acetylene-based compounds such as 3,5-dimethyl-1-hexyne-3-ol and enyne compounds such as 3,5-dimethyl-3-hexen-1-yne, as curing reaction controllers. A silane coupling agent such as methyltrimethoxysilane may be used as an adhesion improver.

The silicone coating amount on the airbag base fabric is preferably 10 $g/m^2$ to 100 $g/m^2$, more preferably 15 $g/m^2$ to 70 $g/m^2$ and even more preferably 20 $g/m^2$ to 40 $g/m^2$, as the necessary airtightness can be obtained with a coating amount of 10 $g/m^2$ or greater. A coating amount of 100 $g/m^2$ or lower will result in coated fabric flexibility, satisfactory storability and reduced total bag weight.

The method of coating the silicone on the woven fabric surface may be a method of immersion of the woven fabric in a resin solution bath followed by mangling and vacuuming of the excess resin and subsequent formation and homogenization, or a method of bar coating with a comma coater, or blasting of the resin using a spray apparatus or foaming apparatus. From the viewpoint of uniformly coating a small amount of resin, it is preferred to employ a method of knife coating of solventless silicone.

For application by an air knife coating method, coating is preferably with the contact pressure between the knife and fabric in the range of 15 N/cm to 15 N/cm, and the base fabric tension in the range of 100 N/cm to 3000 N/cm. High contact pressure with the knife will allow uniform control to a small coated film thickness with a light coating amount. The base fabric tension in the coating step stretches the woven fabric in the warp direction, acting to store up thermal strain.

After silicone coating, the silicone is subjected to a vulcanizing setting (finish heat setting) step for vulcanized crosslinking and final setting of the base fabric. It is important to stabilize warp strain caused by warp tension in the coating step. Setting is therefore preferably carried out with an overfeed of 0.8% or greater in the direction in which the woven fabric is conveyed, i.e. the warp direction, the overfeed being more preferably 1.0% to 3.0%. The amount of overfeed may be determined depending on the shrinkage factor of the weaving yarn and the heat treatment conditions in each step. Feeding with an overfeed can eliminate strain in the warp direction and improve the thermal dimensional stability of the base fabric.

The temperature for the finish heat setting is selected to be a temperature that will help promote silicone vulcanization and improve the dimensional stability of nylon woven fabrics. The finish heat setting temperature is preferably 160°C to 210°C. It is more preferably 170°C to 200°C.

Using an overfeed of 0.8% to 3.0% in the warp direction and a temperature of 160°C to 210°C for finish heat setting is preferred to improve the thermal dimensional stability of the base fabric.

In FMVSS302 combustion testing after 400 hours in an environment of 80°C, 95% humidity, the airbag base fabric of the embodiment is preferably self-extinguishing in both the warp and weft directions whether ignited on the front or back side of the base fabric, or has a burning speed of 100 mm/min or lower. This means that preferably in FMVSS302 combustion testing after 400 hours in an environment of 80°C, 95% humidity, a test piece of the airbag base fabric is judged to either not ignite or to extinguish before the A gauge mark within the designated time, i.e. to be self-extinguishing, in both the warp and weft directions, whether ignited on the front or back side of the base fabric, or has a burning speed of 100 mm/min or lower.

The airbag base fabric of the embodiment preferably does not have increased combustibility when subjected to moist heat treatment. That is, the airbag base fabric has an increase in burning speed after moist heat treatment while holding for 400 hours in an environment of 80°C, 95% humidity of preferably 40% or less, more preferably 30% or less and even more preferably 20% or less, with respect to the burning speed before moist heat treatment.

The silicone adequately adheres to nylon woven fabrics and exhibits thermal dimensional stability as well as reduced increase in burning speed with moist heat treatment. Reducing increase in the burning speed with moist heat treatment can help maintain flame resistance even if the airbag is mounted in a harsh environment.

When evaluating the burning speed of the airbag base fabric of the embodiment after moist heat treatment by FMVSS302 combustion testing, the burning speed ratio for ignition of the coated side (ignition with the coated side facing downward) with respect to ignition of the woven fabric side (ignition with the coated side facing upward) is preferably 3.0 or lower and more preferably 2.5 or lower. The lower limit for the burning speed ratio is preferably 1.0 or greater. Since silicone adequately adheres to the polyamide fiber woven fabric and exhibits thermal dimensional stability, the difference in burning speeds between the coated front and back does not increase under environmental conditions. In other words, the flame resistance can be maintained even with an airbag cushion that has the coated side facing outward, for an airbag mounted in a harsh environment.

The airbag base fabric of the embodiment also preferably has a combing resistance of 350 N or greater after moist heat environment exposure (400 hours in an environment of 85°C, 95% relative humidity), as mentioned above. This is more preferably 420 N or greater and even more preferably 470 N or greater. Combing resistance is the resistance to shifting of the constituent yarn of the woven fabric, and it includes the resistance of silicone adhesion combined with the constraining force on the constituent yarns of the woven fabric texture. A greater combing resistance above 350 N corresponds to more excellent silicone layer adhesion. High combing resistance is one factor for reducing the burning speed. Combing resistance of 800 N or lower corresponds to sufficiently high tearing resistance.

EXAMPLES

The invention will now be explained in greater detail by examples. Evaluation of the properties for the Examples was carried out by the following methods.

(1) Amount of silicone coating on base fabric

A sample of 0.3 m$^2$ area (A) was taken from the base fabric, degreased with dichloromethane and dried at 105°C. It was then dissolved in 200 g of 90% formic acid at ordinary temperature, the insoluble portion was filtered with a glass sintered filter (VIDTEC 17G-3 glass filter by Cosmo Corp.) and thoroughly washed with formic acid and rinsed with water, and the insoluble portion was dried at 105°C and its mass weighed (M). The coating weight (g/m$^2$) was obtained by dividing the formic acid insoluble portion (M) by the area (A) of the fabric sample.

(2) Quantitation of polyamide resin before melt spinning, fibers, and cyclopentanones in woven base fabric.

A sample was cut out from the polyamide resin, polyamide fibers or base fabric under standard conditions (20°C, 65% relative humidity, standing for ≥24 hours).

It was then analyzed by HS-SPME-GC/MS. Approximately 10 mg of the sample was weighed out and stuffed into a head space vial, which was fitted with an SPME fiber assembly. The SPME fiber assembly comprised polydimethylsiloxane coated onto PDMS fibers. The sample-set vial was heated for 5 minutes in a block heater at 180°C and then removed and allowed to cool at room temperature for 5 minutes. The SPME was removed out and analyzed by GC/MS. Quantitative analysis was carried out using a cyclopentanone sample, and the cyclopentanone content was determined by summing the values for the four compounds: a) cyclopentanone, b) cyclopenten-1-one, c) 1,1'-bicyclopentyl-2-one and d) cyclopentanone, 2-cyclopentylidene. When the sample was polyamide fibers, the cyclopentanone content (ppm) in the weighed sample was determined. When the sample was a base fabric, the silicone coating amount was subtracted from the weight of the weighed base fabric to calculate the woven fabric weight, and the cyclopentanone content (ppm) in the structural woven fabric was determined.

The GC/MS apparatus was by Agilent, with GC:7890B, MS:5977B. The following conditions were used.

Column: DB-1 MS (30 m × 0.25 mm, film thickness: 0.25 μm)
Column temperature: 40°C (3 min) → 20°C/min → 300°C
Column flow rate: 1.0 ml/min
Column flow rate: 1.0 mL/min
Injection method: splitless
Injection temperature: 250°C
Interface temperature: 280°C
Ion source temperature: 230°C
Ion source: EI method
Scan range: 50-500 m/z

(3) Terminal group quantity for constituent yarn of base fabric (20 cm$^2$ base fabric)

Constituent yarn was pulled out from the base fabric to obtain a 5 to 10 g sample.

(3a) Amino-terminal group concentration

The fiber sample of constituent yarn pulled out from the base fabric was weighed and dissolved in a 90% aqueous phenol solution. Upon complete dissolution, it was titrated with a 0.05 N aqueous hydrochloric acid solution to pH 3. The amino-terminal group concentration per 1 kg of polymer was calculated from the titer.

(3b) Carboxyl-terminal group concentration

A constituent yarn sample was weighed out as described above and dissolved in benzyl alcohol at 170°C. After complete dissolution, a phenolphthalein indicator was added. Colorimetric titration was then carried out with a 0.1 N NaOH-ethylene glycol solution. The carboxyl-terminal group concentration per 1 kg of polymer was calculated from the titer.

The value of the carboxyl-terminal group concentration minus the amino-terminal group concentration was recorded as the difference in terminal groups of the structural fabric, and the values of the carboxyl-terminal group concentration and amino-terminal group concentration were summed as the terminal groups of the structural fabric.

(4) Quantitation of phosphorus content in woven base fabric

Constituent yarn was pulled out from the base fabric to obtain an approximately 0.5 g sample.

The phosphorus atom content based on phosphoric acid groups in the constituent yarn was determined by inductively coupled plasma emission spectroscopy (ICP-AES) using the following apparatus and conditions.

(Measuring conditions)

ICP-AES apparatus: iCAP6300Duo by Thermo Fisher Scientific
High frequency output: 1150 W
Plasma gas: 12 L/min
Auxiliary gas: 0.5 L/min
Nebulizer gas: 0.5 L/min

Photometry: axial direction
Measuring wavelength: 213 nm
Pretreatment: The sample was wet decomposed with sulfuric acid, nitric acid and hydrochloric acid as the test solution.

(5) Base fabric oil component amount

This was measured by Soxhlet extraction according to JISL1095(2010)9.30. The solvent used was cyclohexane. The moisture content of the base fabric sample was measured by Karl Fischer titration by moisture evaporation according to JISK0068(2001), and the absolute dry weight of the base fabric sample was calculated from the measured weight. This was further converted to the woven fabric weight, as the silicone coating amount subtracted from the base fabric weight, and recorded as the sample weight for the structural fabric. The amount of oil component (wt%) in the structural fabric was calculated from the amount of oil component extracted with a Soxhlet extractor and the sample weight of the structural fabric. In order to ensure precision or weighing of the solid extract, the base fabric sample was replaced with a fresh one and extraction was repeated, as necessary.

(6) Shrinkage dimensional change rate of base fabric

The base fabric is exposed to an environment of 20°C temperature and 65% relative humidity for 24 hours or longer, and a 150 mm-square strip is cut out along the warp and weft directions of the base fabric for use as a sample. Gauge marks are precisely drawn on the sample strip at 100 mm spacings in both the warp and weft directions. The sample strip is placed in a hot air oven at 105°C for 60 minutes without tension. The sample is further placed in an environment of 20°C temperature and 65% relative humidity for 24 hours or longer, and the gauge lengths in the warp and weft directions are measured. The shrinkage rates (%) of the gauge lengths are calculated with respect to the original 100 mm. This was repeated 3 times and the average was calculated. The value of the larger of the shrinkage rates in the warp and weft directions was used as the shrinkage dimensional change rate.

(7) Base fabric burning speed, burning speed increase after moist heat treatment, and burning speed ratio between front and back sides (C/W ratio)

An FMVSS302 combustion test was carried out.
The base fabric in a standard state, and the base fabric in a standard state after being kept in an environment of 80°C, 95% relative humidity for 400 hours, were anchored to a U-frame and provided for measurement by the horizontal plane method with the coated side facing downward, being ignited with a burner flame from the edge of the sample, and the burning speed was evaluated. The test was conducted in both the warp and weft directions, and the burning speed increase (%) before and after moist heat treatment was evaluated.
The burning speed was evaluated for the base fabric sample in a standard state after being kept in an environment of 80°C, 95% relative humidity for 400 hours, both for ignition with the burner flame from the sample edge with the coated side facing downward and ignition with the burner flame from the sample edge with the woven fabric side facing downward, when anchored to the U-frame and provided for measurement by the horizontal plane method, and the ratio between the burning speed with the woven fabric side facing downward (W evaluation) and the burning speed with the coated side facing downward (C evaluation) was evaluated, producing the results listed in the tables shown below as the front and back side burning speed ratios (C/W ratio) after moist heat treatment.

(8) Increase in air permeation of base fabric after moist heat treatment

A "high-pressure air permeability meter" by Cosmo Instruments Co., Ltd. was used to determine the air permeability (mm/s) at a pressure of 50 kPa. The base fabric sample was used for comparative evaluation of the sample in a standard state and the sample in a standard state after being kept for 400 hours in an environment of 80°C, 95% relative humidity, and the air flow rate increase (mm/s) after moist heat treatment was calculated.

(9) Combing resistance of base fabric after moist heat treatment

The combing resistance of the base fabric in a standard state after being kept in an environment of 80°C, 95% relative humidity for 400 hours was measured using 5 samples in the warp and weft directions according to ASTM-D6479(2015), and the average values were recorded.
The base fabric sample used was in the standard state after being kept for 400 hours in an environment of 80°C, 95% relative humidity.

(10) Scrub evaluation of base fabric

The coating adhesion was confirmed by a scrubbing test. The test apparatus used was a scrub tester, with testing conditions according to ISO 5981. Testing was carried out using the base fabric in the standard state and the base fabric in the standard state after being kept for 400 hours in an environment of 80°C, 95% relative humidity, with observation every 50 scrubs beginning after 200 or more scrubs, and evaluating the number of scrubs until peeling occurred.

[Example 1]

Polyamide 6/6 polymer that lacks terminal blocks was polymerized with phenylphosphonic acid as the polymerization catalyst and copper iodide and potassium iodide as heat stabilizers, and was removed out as chips and further subjected to solid-phase polymerization.

The polymer chips were melted at 300°C and extruded by melt spinning at 290°C with a residence time of 180 seconds, after which an aliphatic synthetic esteric spinning oil was applied before stretching, to obtain polyamide 6/6 fibers (470 dtex/136 filament). The fibers contained 140 ppm phosphorus element, 60 ppm copper element and 1800 ppm iodine element. The difference between the carboxyl-terminal group concentration and amino-terminal group concentration was 50 millimole equivalent/kg polymer. The fibers contained cyclopentanones at 500 ppm. The boiling water shrinkage factor according to JISL1017(2002)8.14 was 7.5%.

The fibers were warped without twisting and without sizing, and the same yarn was used as the weft yarn for weaving into a plain weave using a water jet loom.

The woven fabric was scoured using an open soaper scouring machine. After immersion and standing for 1 minute in a 80°C warm water bath containing 0.5 g/l sodium alkylbenzene sulfonate and 0.5 g/l soda ash, the fabric was successively immersed for 1 minute each in three neutral 80°C warm water baths. The warp tension was controlled to 0.22 N/cm with a dancer roll for stable conveying of the scouring woven fabric. It was then dried for 3 minutes with hot air at 110°C.

A solventless addition-type silicone resin was coated to a coating amount of 20 g/m$^2$ by air knife coating. The base fabric tension in the warp direction was 580 N/m, and the knife blade thickness was selected for the desired coating amount.

A pin tenter heat setting machine was then used for 2 minutes of processing at 190°C with a warp overfeed contraction of 2.0% and 0% tentering to obtain a coated base fabric for an airbag. The cover factor was 2145, as determined from the woven density and constituent yarn size.

The physical properties of the obtained base fabric are shown in Table 1 below. Change in warp was used for dimensional stability because of the larger rate of change in the warp direction. Increase in burning speed due to moist heat treatment was inhibited. The burning speed with the coated side facing downward was somewhat large compared to the burning speed with the woven fabric side facing downward, and this level was maintained even after moist heat treatment.

[Examples 2 to 4]

An airbag base fabric was obtained in the same manner as Example 1, except that the temperature of the warm water bath during scouring of the woven fabric with the open soaper scouring machine was changed to the temperature listed in Table 1.

[Comparative Example 1]

An airbag base fabric was obtained in the same manner as Example 1, except that during scouring of the woven fabric with the open soaper scouring machine, the successive immersion for 1 minute in the three neutral 80°C warm water baths was followed by drying for 3 minutes at 110°C.

The increase in burning speed due to moist heat treatment was significant. The burning speed with the coated side facing downward was large compared to the burning speed with the woven fabric side facing downward, with the difference being larger after moist heat treatment.

[Examples 5 to 7 and Comparative Example 2]

Airbag base fabrics were obtained in the same manner as Example 1, except that in the vulcanizing setting step using a pin tenter heat setting machine after knife coating, the overfeed contraction for the warp was changed to the values listed in Table 1 or 2.

In Comparative Example 2, the increase in burning speed due to moist heat treatment was significantly large. The burning speed with the coated side facing downward was large compared to the burning speed with the woven fabric side facing downward, with the difference being larger after moist heat treatment.

[Example 8]

An airbag base fabric was obtained in the same manner as Example 1, except that during scouring of the greige with the open soaper scouring machine, the immersion and standing for 1 minute in a 60°C warm water bath containing 0.5 g/l sodium alkylbenzene sulfonate and 0.5 g/l soda ash was followed by successive immersion for 1 minute in three neutral 60°C warm water baths, and then drying for 3 minutes at 110°C.

An airbag base fabric was obtained in the same manner as Example 1, except that the coated base fabric for an airbag was obtained by 2 minutes of treatment at 190°C after knife coating using a pin tenter heat setting machine with a warp overfeed contraction of 1.5% and 0% tentering.

[Comparative Example 3]

An airbag base fabric was obtained in the same manner as Example 8, except that in the vulcanizing setting step using a pin tenter heat setting machine after knife coating, the overfeed contraction for the warp was changed to 0.5%.

The increase in burning speed due to moist heat treatment was high.

[Comparative Example 4]

During scouring of the greige with the open soaper scouring machine, the immersion and standing for 1 minute in a 30°C warm water bath containing 0.5 g/l sodium alkylbenzene sulfonate and 0.5 g/l soda ash was followed by immersion for 1 minute in a neutral 30°C warm water bath, and then drying for 3 minutes at 110°C. In the vulcanizing setting step using a pin tenter heat setting machine after knife coating, the overfeed contraction for the warp was changed to 1.0%. An airbag base fabric was otherwise obtained in the same manner as Example 1.

[Example 9]

Polyamide 6/6 polymer that lacks terminal blocks was polymerized with hypophosphorous acid as the polymerization catalyst and copper iodide and potassium iodide as heat stabilizers, and was removed out as chips and further subjected to solid-phase polymerization.

The polymer chips were extruded, and an aliphatic synthetic esteric spinning oil was applied before stretching, to obtain polyamide 6/6 fibers (470 dtex/136 filament). The fibers contained 10 ppm phosphorus element, 60 ppm copper element and 1800 ppm iodine element. The difference between the carboxyl-terminal group concentration and amino-terminal group concentration was 50 millimole equivalent/kg polymer. The fibers contained cyclopentanones at 400 ppm.

An airbag base fabric was obtained in the same manner as Example 1 using these fibers. Increase in burning speed due to moist heat treatment was inhibited. The burning speed with the coated side facing downward was somewhat large compared to the burning speed with the woven fabric side facing downward, and this level was maintained even after moist heat treatment.

[Comparative Example 5]

An airbag base fabric was obtained in the same manner as Example 10, except that during scouring of the greige with the open soaper scouring machine, no alkali washing solution was used, and the successive immersion for 1 minute in the three neutral 80°C warm water baths was followed by drying for 3 minutes at 110°C.

The increase in burning speed due to moist heat treatment was significant.

[Example 10]

During polymerization of the polyamide 6/6 polymer in Example 9, hexamethylenediamine was added to the monomer salt in an equimolar amount to reduce the difference between the carboxyl-terminal group concentration and amino-terminal group concentration. The polymer chips were extruded, and an aliphatic synthetic esteric spinning oil was applied before stretching, to obtain polyamide 6/6 fibers (470 dtex/136 filament). The fibers contained 10 ppm phosphorus element, 60 ppm copper element and 1800 ppm iodine element. The difference between the carboxyl-terminal group concentration and amino-terminal group concentration was 5 millimole equivalent/kg polymer. The fibers contained cyclopentanones at 400 ppm. An airbag base fabric was obtained in the same manner as Example 1 using these fibers.

[Example 11]

An airbag base fabric was obtained in the same manner as Example 1, except that the tensile force for conveying the woven fabric during scouring of the woven fabric with the open soaper scouring machine was changed to 1.5 N/cm.

[Example 12]

An airbag base fabric was obtained in the same manner as Example 1, except that during scouring of the woven fabric with the open soaper scouring machine, the immersion and standing for 1 minute in a 80°C warm water bath containing 0.5 g/l sodium alkylbenzene sulfonate and 0.5 g/l soda ash was followed by continuation to the hot air drying step without immersion in a neutral 80°C warm water bath.

The conditions and the results for the physical properties in Examples 1 to 12 and Comparative Examples 1 to 5 are shown in Tables 1 and 2.

[Table 1]

Table 1

| | | | Example 1 | Example 2 | Example 3 | Example 4 | Comp. Example 1 | Example 5 | Example 6 | Example 7 |
|---|---|---|---|---|---|---|---|---|---|---|
| Polyamide fibers | Cyclopentanones | ppm | 500 | 500 | 500 | 500 | 500 | 500 | 500 | 500 |
| Scouring method | Alkali bath temperature | °C | 80 | 70 | 60 | 30 | 80 | 80 | 80 | 80 |
| | | | | | | | (Neutral) | | | |
| | Conveying warp tension | N/cm | 0.22 | 0.22 | 0.22 | 0.22 | 0.22 | 0.22 | 0.22 | 0.22 |
| | Other | | | | | | | | | |
| Vulcanizing method | Temperature | °C | 190 | 190 | 190 | 190 | 190 | 190 | 190 | 190 |
| | Overfeed | % | 2.0 | 2.0 | 2.0 | 2.0 | 2.0 | 2.5 | 1.5 | 1.0 |
| Base fabric | Cover factor | | 2145 | 2145 | 2145 | 2145 | 2145 | 2150 | 2140 | 2134 |
| | Difference in terminal groups of constituent yarn | meg/kg | 50 | 50 | 50 | 50 | 50 | 50 | 50 | 50 |
| | Sum of terminal groups of constituent yarn | meq/kg | 95 | 95 | 95 | 95 | 95 | 95 | 95 | 95 |
| | Phosphorus content in woven fabric | ppm | 140 | 140 | 140 | 140 | 140 | 140 | 140 | 140 |
| | Cyclopentanone content in woven fabric | ppm | 40 | 90 | 150 | 220 | 270 | 40 | 40 | 40 |
| | Silicone coating amount | g/m$^2$ | 20 | 20 | 20 | 20 | 20 | 20 | 20 | 20 |
| | Oil component amount | mass% | 0.01 | 0.01 | 0.02 | 0.04 | 0.10 | 0.01 | 0.01 | 0.01 |
| | Shrinkage dimensional change rate | % | 0.75 | 0.75 | 0.75 | 0.75 | 0.8 | 0.5 | 0.95 | 1.25 |
| | Scrubbing before moist heat treatment | Times | 500 | 500 | 500 | 500 | 450 | 500 | 500 | 500 |
| | Scrubbing after moist heat treatment | Times | 500 | 450 | 450 | 450 | 250 | 500 | 500 | 500 |
| | Air permeation increase after moist heat treatment | mm/s | 0 | 20 | 50 | 80 | 100 | 0 | 0 | 0 |

(continued)

|  |  | Example 1 | Example 2 | Example 3 | Example 4 | Comp. Example 1 | Example 5 | Example 6 | Example 7 |
|---|---|---|---|---|---|---|---|---|---|
| Combing resistance after moist heat treatment | N | 500 | 480 | 450 | 400 | 300 | 500 | 500 | 500 |
| Burning speed increase after moist heat treatment | Warp% | 9% | 14% | 30% | 40% | 67% | 2% | 15% | 32% |
|  | Weft% | 7% | 15% | 28% | 38% | 65% | 0% | 15% | 30% |
| C/W ratio after moist heat treatment | Warp | 2.3 | 2.2 | 2.4 | 3.0 | 3.9 | 2.2 | 2.5 | 2.8 |
|  | Weft | 2.3 | 2.1 | 2.7 | 3.0 | 4.2 | 2.2 | 2.5 | 2.9 |

[Table 2]

[Table 2]

Table 2

| | | | Comp. Example 2 | Example 8 | Comp. Example 3 | Comp, Example 4 | Example 9 | Comp. Example 5 | Example 10 | Example 11 | Example 12 |
|---|---|---|---|---|---|---|---|---|---|---|---|
| Polyamide fibers | Cyclopentanones | ppm | 500 | 500 | 500 | 500 | 400 | 400 | 400 | 500 | 500 |
| Scouring method | Alkali bath temperature | °C | 80 | 60 | 60 | 30 | 80 | 80 | 80 | 80 | 80 |
| | | | | | | | | (Neutral) | | | |
| | Conveying warp tension | N/cm | 0.22 | 0.22 | 0.22 | 0.22 | 0.22 | 0.22 | 0.22 | 1.5 | 0.22 |
| | Other | | | | | | | | | No relaxation during conveying of base fabric | No water rinsing after scouring |
| Vulcanizing method | Temperature | °C | 190 | 190 | 190 | 190 | 190 | 190 | 190 | 190 | 190 |
| | Overfeed | % | 0.5 | 1.5 | 0.5 | 1.0 | 2.0 | 2.0 | 2.0 | 2.0 | 2.0 |
| | Cover factor | | 2129 | 2140 | 2134 | 2140 | 2145 | 2145 | 2145 | 2145 | 2145 |
| | Difference in terminal groups of constituent yarn | meq/kg | 50 | 50 | 50 | 50 | 50 | 50 | 5 | 50 | 50 |
| | Sum of terminal groups of constituent yarn | meq/kg | 95 | 95 | 95 | 95 | 95 | 95 | 95 | 95 | 95 |
| | Phosphorus content in woven fabric | ppm | 140 | 140 | 140 | 140 | 10 | 10 | 10 | 140 | 140 |
| | Cyclopentanone content in woven fabric | ppm | 40 | 150 | 150 | 220 | 40 | 270 | 30 | 190 | 80 |
| | Silicone coating amount | g/m$^2$ | 20 | 20 | 20 | 20 | 20 | 20 | 20 | 20 | 20 |

| | | | Comp. Example 2 | Example 8 | Comp. Example 3 | Comp, Example 4 | Example 9 | Comp. Example 5 | Example 10 | Example 11 | Example 12 |
|---|---|---|---|---|---|---|---|---|---|---|---|
| Base fabric | Oil component amount | mass% | 0.01 | 0.02 | 0.02 | 0.04 | 0.01 | 0.09 | 0.01 | 0.09 | 0.04 |
| | Shrinkage dimensional change rate | % | 1.5 | 0.95 | 1.5 | 1.2 | 0.75 | 0.75 | 0.75 | 0.9 | 0.75 |
| | Scrubbing before moist heat treatment | Times | 500 | 500 | 500 | 450 | 500 | 350 | 500 | 450 | 500 |
| | Scrubbing after moist heat treatment | Times | 500 | 450 | 450 | 350 | 500 | 200 | 500 | 400 | 400 |
| | Air permeation increase after moist heat treatment | mm/s | 0 | 50 | 50 | 80 | 0 | 150 | 0 | 80 | 0 |
| | Combing resistance after moist heat treatment | N | 500 | 500 | 450 | 340 | 500 | 280 | 500 | 400 | 400 |
| | Burning speed increase after moist heat treatment | Warp% | 45% | 34% | 57% | 54% | 9% | 94% | 8% | 40% | 40% |
| | | Weft% | 43% | 32% | 58% | 51% | 9% | 77% | 7% | 38% | 40% |
| | C/W ratio after moist heat treatment | Warp | 3.1 | 2.5 | 3.2 | 3.2 | 1.6 | 3.2 | 1.6 | 3.0 | 3.0 |
| | | Weft | 3.1 | 2.8 | 3.1 | 3.1 | 1.6 | 3.3 | 1.6 | 2.8 | 3.0 |

EP 4 656 794 A2

INDUSTRIAL APPLICABILITY

The airbag base fabric of the invention has stable flame retardance under varying environmental conditions and has a low difference in flame retardance on both sides of the coated front or back side of the base fabric. It can therefore serve as a base fabric which can be used as an airbag cushion without distinction between the coated front and back sides. This allows the airbag cushion to be designed to protect the inner side of an airbag cushion from environmental conditions by having the coated side facing outward for covering by the coating film. Because it has stable flame retardance even under harsh environmental conditions, it can also be suitably used as an airbag for mounting outside of vehicle cabins.

ITEMS

[Item 1]

An airbag base fabric which is a polyamide multifilament woven fabric, wherein:

at least one side of the woven fabric has a silicone film layer,
the silicone film amount is 10 g/m$^2$ to 100 g/m$^2$,
the cyclopentanone content is 0 ppm to 250 ppm with respect to the woven fabric weight,
the larger shrinkage dimensional change rate among the shrinkage dimensional change rates in the warp and weft directions before and after heating at 105°C for 60 minutes is 0% to 1.4%, and
the combing resistance after 400 hours in an environment of 85°C, 95% relative humidity is 350 N or greater.

[Item 2]

The airbag base fabric according to item 1, wherein the amount of oil component in the woven fabric is 0 wt% to 0.04 wt%.

[Item 3]

The airbag base fabric according to item 1 or 2, which contains 10 ppm to 300 ppm phosphorus atoms with respect to the weight of the constituent yarn of the woven fabric.

[Item 4]

The airbag base fabric according to any one of items 1 to 3, wherein the amount of carboxylic acid ends is greater than the amount of amine ends at the molecular chain ends of the polyamide, the difference being 10 millimole equivalent/kg to 50 millimole equivalent/kg.

[Item 5]

The airbag base fabric according to any one of items 1 to 4, which satisfies the following condition 1) or 2) in both the warp and weft directions:

1) being self-extinguishing after ignition of either the front or back side of the base fabric,
2) having a burning speed of 100 mm/min or lower on both the front and back sides, and a ratio of 1.0 to 3.0 between the burning speeds on the front and back sides,

in an FMVSS302 combustion test after 400 hours in an environment of 80°C, 95% relative humidity.

[Item 6]

A method for producing an airbag base fabric of a polyamide multifilament woven fabric, the method including the following steps:

a step of melt spinning a polyamide to obtain a polyamide multifilament yarn having a cyclopentanone content of 0 ppm to 800 ppm,
a step of using the polyamide multifilament yarn as weaving yarn to obtain a woven fabric,
a scouring step using an alkali washing solution at a temperature of 35°C or higher,

a drying step,
a step of coating silicone onto at least one side of the woven fabric to form a silicone film layer, and
a vulcanizing setting step.

[Item 7]

The method for producing an airbag base fabric according to item 6, wherein in the scouring step, water rinsing is carried out after a treatment bath of an alkali washing solution or surfactant.

[Item 8]

The method for producing an airbag base fabric according to item 6 or 7, wherein in the scouring step, the warp tension while the woven fabric is conveyed is 0.08 N/cm to 0.8 N/cm.

[Item 9]

The method for producing an airbag base fabric according to any one of items 6 to 8, wherein in the vulcanizing setting step, vulcanizing setting is carried out with an overfeed of 0.8% or greater in the warp direction at a temperature of 160°C or higher.

**Claims**

1.  An airbag base fabric which is a polyamide multifilament woven fabric, wherein:

    at least one side of the woven fabric has a silicone film layer,
    the silicone film amount, determined as described in the description, is 10 g/m$^2$ to 100 g/m$^2$
    the cyclopentanone content, determined as described in the description, is 0 ppm to 250 ppm with respect to the woven fabric weight,
    the larger shrinkage dimensional change rate among the shrinkage dimensional change rates in the warp and weft directions before and after heating at 105°C for 60 minutes, determined as described in the description, is 0% to 1.0%, and
    the combing resistance after 400 hours in an environment of 85°C, 95% relative humidity, determined as described in the description, is 350 N or greater.

2.  The airbag base fabric according to claim 1, wherein the amount of oil component in the woven fabric, determined as described in the description, is 0 wt% to 0.04 wt%.

3.  The airbag base fabric according to claim 1 or 2, which contains 10 ppm to 300 ppm phosphorus atoms, determined as described in the description, with respect to the weight of the constituent yarn of the woven fabric.

4.  The airbag base fabric according to any one of claims 1 to 3, wherein the amount of carboxylic acid ends, determined as described in the description, is greater than the amount of amine ends, determined as described in the description, at the molecular chain ends of the polyamide, the difference being 10 millimole equivalent/kg to 50 millimole equivalent/kg.

5.  The airbag base fabric according to any one of claims 1 to 4, which satisfies the following condition 1) or 2) in both the warp and weft directions:

    1) being self-extinguishing after ignition of either the front or back side of the base fabric,
    2) having a burning speed of 100 mm/min or lower on both the front and back sides, and a ratio of 1.0 to 3.0 between the burning speeds on the front and back sides,

    in an FMVSS302 combustion test after 400 hours in an environment of 80°C, 95% relative humidity.

# FIG. 1

a )
Cyclopentanon

b )
Cyclopenten-1-one

c )
1,1'-Bicyclopentyl-2-one

d )
Cyclopentanone,
2-cyclopentylidene

**EP 4 656 794 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7108903 A
- JP 2018172006 A
- JP 2006205805 A
- JP 2004115981 A
- JP 2001214371 A